(19) Europäisches Patentamt
European Patent Office
Office européen des brevets

(11) EP 1 683 818 B1

(12) EUROPÄISCHE PATENTSCHRIFT

(45) Veröffentlichungstag und Bekanntmachung des Hinweises auf die Patenterteilung:
01.03.2017 Patentblatt 2017/09

(51) Int Cl.:
C08G 18/08 (2006.01)     C08G 18/02 (2006.01)

(21) Anmeldenummer: 06000271.4

(22) Anmeldetag: 07.01.2006

(54) **Uretdionbildung in Lösung**

Uretdione formation in solution

Formation des uretdiones en solution

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **21.01.2005 DE 102005002867**

(43) Veröffentlichungstag der Anmeldung:
**26.07.2006 Patentblatt 2006/30**

(73) Patentinhaber: **Covestro Deutschland AG 51373 Leverkusen (DE)**

(72) Erfinder:
• **Richter, Frank, Dr.**
**51373 Leverkusen (DE)**
• **Laas, Hans-Josef, Dr.**
**51519 Odenthal (DE)**
• **Halpaap, Reinhard, Dr.**
**51519 Odenthal (DE)**
• **Hecking, Andreas**
**40764 Langenfeld (DE)**

(74) Vertreter: **Levpat
c/o Covestro AG
Gebäude 4825
51365 Leverkusen (DE)**

(56) Entgegenhaltungen:
**EP-A- 0 780 377     EP-A- 1 422 223
WO-A-2004/005364**

• **DATABASE WPI Section Ch, Week 199944 Derwent Publications Ltd., London, GB; Class A41, AN 1999-522662 XP002382268 & JP 11 228524 A (NIPPON POLYURETHANE KOGYO KK) 24. August 1999 (1999-08-24)**
• **LAAS H J ET AL: "ZUR SYNTHESE ALIPHATISCHER POLYISOCYANATE-LACKPOLYISOCYANATE MIT BIURET-, ISOCYANURAT- ODER URETDIONSTRUKTUR THE SYNTHESIS OF ALIPHATIC POLYISOCYANATES CONTAINING BIURET, ISOCYANURATE OR URETDIONE BACKBONES FOR USE IN COATINGS" Januar 1994 (1994-01), JOURNAL FUR PRAKTISCHE CHEMIE, CHEMIKER ZEITUNG, WILEY VCH, WEINHEIM, DE, PAGE(S) 185-200 , XP000441642 ISSN: 1436-9966 * Seite 196, linke Spalte - Seite 198, rechte Spalte ***

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Herstellung hoch uretdiongruppenhaltiger Polyisocyanate durch phosphinkatalysierte Isocyanatoligomerisierung in Anwesenheit von organischen Carbonaten oder Nitrilen.

Uretdiongruppen aufweisende aliphatische Isocyanate sind wertvolle Rohstoffe u.a. zur Herstellung von Polyurethanbeschichtungen. Produkte auf Basis ggf. verzweigter, linear-aliphatischer Diisocyanate zeichnen sich durch eine besonders niedrige Viskosität aus. Produkte auf Basis cycloaliphatischer Diisocyanate sind in der Regel hochviskose bis feste Substanzen, die als abspalterfreie, intern blockierte Vernetzer in Beschichtungssystemen eingesetzt werden können. Eine Zusammenfassung ist in J. Prakt. Chem./Chem. Ztg. 1994, 336, 185-200 gegeben.

Tris(dialkylamino)phosphine (DE-A 3 030 513) ggf. in Verbindung mit Cokatalysatoren (DE-A 3 437 635) weisen eine gute Selektivität für die Bildung von Uretdiongruppen (Uretdionselektivität) auf. Ihrer technischen Einsetzbarkeit steht allerdings der schwerwiegende Makel des hohen krebserzeugenden Potenzials ihrer Phosphoroxide, z.B. Hexamethylphosphorsäuretriamid, entgegen.

DE-A 3 739 549 offenbart die katalytische NCO-Dimerisierung mit 4-Dialkylaminopyridinen, wie z.B. 4-Dimethylaminopyridin (DMAP), wobei allerdings nur im Fall spezieller cycloaliphatischer Isocyanate wie Isophorondiisocyanat (IPDI) die Uretdionbildung selektiv verläuft. Linearaliphatische Isocyanate wie Hexamethylendiisocyanat (HDI) sowie verzweigte, linearaliphatische Isocyanate wie Trimethylhexandiisocyanat (TMDI) und Methylpentandiisocyanat (MPDI) liefern mit DMAP und verwandten Verbindungen hauptsächlich stark gefärbte, heterogene Reaktionsprodukte.

DE-A 1 670 720 offenbart die Herstellung von Uretdiongruppen aufweisenden aliphatischen Polyisocyanaten, wobei als Katalysatoren tertiäre Phosphine mit mindestens einem aliphatischen Substituenten sowie Bortrifluorid und seine Addukte eingesetzt werden. Die Uretdionselektivität ist hierbei temperaturabhängig, wobei stets merkliche Mengen an viskositätssteigernden Isocyanat-Trimeren (Isocyanurate und Iminooxadiazindione) und, insbesondere bei Temperaturen > 80°C, auch andere unerwünschte Nebenprodukte wie Carbodiimide oder Uretonimine gebildet werden.

Eine Lösung zur Steigerung der Uretdionselektivität und Verringerung der Nebenproduktbildung ist der Einsatz spezieller, sterisch anspruchsvoller Phosphine mit P-gebundenen Cycloalkylgruppen (EP-A 1 422 223, nicht vorveröffentlichte deutsche Patentanmeldung DE 10354544).

Die Tatsache bei gegebenem Phosphinkatalysator die Uretdionselektivität durch Zugabe von Additiven bzw. Lösungsmitteln zu verbessern, wurde bereits im Rahmen von JP 11228524 untersucht. Demnach sollen sich zur Herstellung uretdiongruppenreicher Polyisocyanate unter Einwirkung von Phosphinkatalysatoren nicht-aromatische Lösungsmittel mit einem Löslichkeitsparameter nach Hildebrand größer 7 cal$^{1/2}$ cm$^{-3/2}$ eignen. Wie im Rahmen der Ausführungsbeispiele der vorliegenden Anmeldung jedoch gezeigt werden konnte, ist dies jedoch nicht immer zuverlässig der Fall (vgl. Chloroform; Hildebrand-Parameter 9,3 cal$^{1/2}$ cm$^{-3/2}$ gegenüber N-Methylpyrrolidon, NMP; Hildebrand-Parameter 11,3 cal$^{1/2}$ cm$^{-3/2}$). Der Fachmann kann folglich aus JP 11228524 keine generelle Lehre ziehen, welche Lösungsmittel sich zuverlässig zur Steigerung der Uretdionselektivität und Minderung der Nebenproduktbildung eignen und welche nicht.

Darüberhinaus wird in zahlreichen Druckschriften allgemein offenbart, Isocyanatoligomerisierungen in Anwesenheit von Lösungsmitteln durchzuführen, ohne jedoch Einzelverbindungen zu nennen und/oder spezifisch gerade auf solche einzugehen, die zu einer Verbesserung der Uretdionselektivität und Minderung der Nebenproduktbildung führten.

Es wurde nun gefunden, dass sich der gepaarte Einsatz von Phosphinen und organischen Carbonaten und/oder organischen Nitrilen als Katalysatorsystem besonders vorteilhaft auf die Selektivität bei der Uretdionbildung auswirkt.

Gegenstand der Erfindung ist daher die Verwendung von organischen Carbonaten und/oder organischen Nitrilen bei der phosphinkatalysierten Oligomerisierung von Mono- und/oder Polyisocyanaten zu Uretdionen, um eine Selektivitätssteigerung bei der Oligomerisation zu erreichen.

Ein weiterer Gegenstand der Erfindung ist ein Verfahren zur Herstellung von uretdiongruppenhaltigen Polyisocyanaten, bei dem Polyisocyanate in Gegenwart eines Katalysatorsystems enthaltend

A) Phosphine und

B) Organische Carbonate und/oder organische Nitrile

oligomerisiert werden.

Als Polyisocyanate können alle dem Fachmann an sich bekannten aliphatischen, cycloaliphatischen und/oder araliphatischen Polyisocyanate mit einer NCO-Funktionalität bevorzugt ≥ 2 eingesetzt werden, wobei es unwichtig ist, ob diese mittels Phosgen oder nach phosgenfreien Verfahren hergestellt wurden. Falls gewünscht, können auch geringe Mengen an Monoisocyanaten mitverwendet werden, wobei dies allerdings nicht bevorzugt ist.

Bevorzugt werden aliphatische und/oder cycloaliphatische Polyisocyanate einzeln oder in beliebigen Mischungen untereinander eingesetzt.

Beispielsweise geeignet sind die isomeren Pentandiisocyanate, Hexandiisocyanate, Heptandiisocyanate, Octandiisocyanate, Nonandiisocyanate, Dekandiisocyanate, Undekandiisocyanate und Dodecandiisocyanate sowie Isophorondiisocyanat (IPDI), Bis(isocyanatocyclohexyl)methan ($H_{12}$MDI), Bis(isocyanatomethyl)benzol (Xylylendiisocyanat, XDI) und Bis(2-isocyanatoprop-2-yl)benzol (Tetramethylxylylendiisocyanat, TMXDI).

Besonders bevorzugt werden als Polyisocyanate Hexamethylendiisocyanat (HDI), Methylpentandiisocyanat (MPDI), Trimethylhexandiisocyanat (TMDI), Bis(isocyanatomethyl)cyclohexan ($H_6$XDI) sowie Norbornandiisocyanat (NBDI) einzeln oder in beliebigen Mischungen untereinander eingesetzt.

Selbstverständlich können als Polyisocyanate im erfindungsgemäßen Verfahren auch die auf den vorstehend genannten Polyisocyanaten basierenden höhermolekularen NCO-funktionellen Folgeprodukte mit Isocyanurat-, Uretdion-, Iminooxadiazintrion-, Urethan-, Allophanat- und/oder Biuretstruktur eingesetzt werden.

Als Phosphine werden tertiäre Phosphine mit Alkyl- und/oder Arylgruppen als Substituenten eingesetzt, wobei diese gegebenenfalls auch substituiert sein können.

Beispiele bevorzugt einzusetzender tertiärer Phosphine sind solche mit drei Alkylsubstituenten wie z.B.: Trimethylphosphin, Triethylphosphin, Tripropylphosphin, Tributylphosphin, Cyclopentyldimethylphosphin, Pentyl-dimethylphosphin, Cyclopentyl-diethylphosphin, Pentyl-diethylphosphin, Cyclopentyl-di-propylphosphin, Pentyl-di-propylphosphin, Cyclopentyl-dibutylphosphin, Pentyl-dibutylphosphin, Cyclopentyl-dihexylphosphin, Pentyl-dihexylphosphin, Dicyclopentylmethylphosphin, Dipentyl-methylphosphin, Dicyclopentyl-ethylphosphin, Dipentyl-ethylphosphin, Dicyclopentyl-propylphosphin, Dipentyl-propylphosphin, Dicyclopentyl-butylphosphin, Dipentylbutylphosphin, Dicyclopentyl-pentylphosphin, Dicyclopentyl-hexylphosphin, Dipentylhexylphosphin, Dicyclopentyl-octylphosphin, Dipentyl-octylphosphin, Tricyclopentylphosphin, Tripentylphosphin, Cyclohexyl-dimethylphosphin, Hexyl-dimethylphosphin, Cyclohexyl-diethylphosphin, Hexyl-diethylphosphin, Cyclohexyl-dipropylphosphin, Hexyl-dipropylphosphin, Cyclohexyl-dibutylphosphin, Hexyl-dibutylphosphin, Cyclohexyl-dihexylphosphin, Cyclohexyl-dioctylphosphin, Dicyclohexyl-methylphosphin, Dihexyl-methylphosphin, Dicyclohexyl-ethylphosphin, Dihexyl-ethylphosphin, Dicyclohexyl-propylphosphin, Dihexyl-propylphosphin, Dicyclohexylbutylphosphin, Dihexyl-butylphosphin, Dicyclohexyl-hexylphosphin, Dicyclohexyl-octylphosphin, Tricyclohexylphosphin, Trihexylphosphin, Trioctylphosphin, Norbornyl-dimethylphosphin, Norbornyl-diethylphosphin, Norbornyl-di-n-propylphosphin, Norbornyl-di-isopropylphosphin, Norbornyl-dibutylphosphin Norbornyl-dihexylphosphin, Norbornyl-dioctylphosphin, Dinorbornylmethylphosphin, Dinorbornyl-ethylphosphin, Dinorbornyl-n-propylphosphin, Dinorbornyl-isopropylphosphin, Dinorbornyl-butylphosphin, Dinorbornyl-hexylphosphin, Dinorbornyl-octylphosphin, Trinorbornylphosphin, Dimethyl-(1,7,7-trimethyl-bicyclo[2.2.1]hept-2-yl)-phosphin, Diethyl-(1,7,7-trimethyl-bicyclo[2.2.1]hept-2-yl)-phosphin, Di-n-propyl-(1,7,7-trimethyl-bicyclo[2.2.1]-hept-2-yl)-phosphin, Di-iso-propyl-(1,7,7-trimethyl-bicyclo[2.2.1]hept-2-yl)-phosphin, Dibutyl-(1,7,7-trimethyl-bicyclo[2.2.1]hept-2-yl)-phosphin, Dihexyl-(1,7,7-trimethyl-bicyclo[2.2.1]hept-2-yl)-phosphin, Dioctyl-(1,7,7-trimethyl-bicyclo[2.2.1]hept-2-yl)-phosphin, Methyl-bis-(1,7,7-trimethyl-bicyclo[2.2.1]hept-2-yl)-phosphin, Ethyl-bis-(1,7,7-trimethyl-bicyclo[2.2.1]hept-2-yl)-phosphin, Propyl-bis-(1,7,7-trimethyl-bicyclo[2.2.1]hept-2-yl)-phosphin, Butyl-bis-(1,7,7-trimethyl-bicyclo[2.2.1]hept-2-yl)-phosphin, Hexyl-bis-(1,7,7-trimethyl-bicyclo[2.2.1]hept-2-yl)-phosphin, Octyl-bis-(1,7,7-trimethyl-bicyclo[2.2.1]hept-2-yl)-phosphin, Dimethyl-(2,6,6-trimethyl-bicyclo-[3.1.1]hept-3-yl)-phosphin, Diethyl-(2,6,6-trimethyl-bicyclo[3.1.1]hept-3-yl)-phosphin, Dipropyl-(2,6,6-trimethyl-bicyclo[3.1.1]hept-3-yl)-phosphin, Dibutyl-(2,6,6-trimethyl-bicyclo[3.1.1]hept-3-yl)-phosphin, Dihexyl-(2,6,6-trimethyl-bicyclo[3.1.1]hept-3-yl)-phosphin, Dioctyl-(2,6,6-trimethyl-bicyclo[3.1.1]hept-3-yl)-phosphin, Methyl-bis-(2,6,6-trimethyl-bicyclo[3.1.1]hept-3-yl)-phosphin, Ethyl-bis-(2,6,6-trimethyl-bicyclo[3.1.1]hept-3-yl)-phosphin, Propyl-bis-(2,6,6-trimethyl-bicyclo-[3.1.1]hept-3-yl)-phosphin, Butyl-bis-(2,6,6-trimethyl-bicyclo[3.1.1]hept-3-yl)-phosphin, Hexyl-bis-(2,6,6-trimethyl-bicyclo[3.1.1]hept-3-yl)-phosphin sowie Octyl-bis-(2,6,6-trimethyl-bicyclo-[3.1.1]hept-3-yl)-phosphin.

Diese können als Katalysator für die Uretdionbildung einzeln, in beliebigen Mischungen untereinander oder in Mischungen mit anderen primären, sekundären und/oder tertiären Alkyl-, Aralkyl- und/oder Arylphosphinen verwendet werden.

Die Menge des im erfindungsgemäßen Verfahren einzusetzenden Katalysators richtet sich in erster Linie nach der angestrebten Reaktionsgeschwindigkeit und beträgt 0,01 bis 5 mol-%, bezogen auf die Summe der Stoffmengen des eingesetzten Isocyanats und des Katalysators. Bevorzugt werden 0,05 bis 3 mol-% Katalysator eingesetzt.

Die in B) eingesetzten organischen Carbonate entsprechen der allgemeinen Formel (I)

$$R^1O\text{-}C(O)\text{-}OR^2 \qquad (I)$$

wobei $R^1$ und $R^2$ unabhängig voneinander gleiche oder verschiedene $C_1$ - $C_{20}$-Reste sind, die linear, verzweigt oder Teile cyclischer Ringsysteme bilden und gegebenenfalls heteroatomhaltig sind.

Beispiele solcher Carbonate sind Dimethylcarbonat, Diethylcarbonat, Dipropylcarbonat, Dibutylcarbonat, Dipentylcarbonat, Dihexylcarbonat, Dioctylcarbonat, Diphenylcarbonat, Diallylcarbonat, Ditolylcarbonat, Butyl-phenylcarbonat, 1,3-Dioxolan-2-on (Ethylencarbonat), 4-Methyl-1,3-Dioxolan-2-on (Propylencarbonat), 4-Ethyl-1,3-Dioxotan-2-on (Butylencarbonat), 4-Propyl-1,3-Dioxolan-2-on, 4-Vinyl-1,3-Dioxolan-2-on, 1,3-dioxan-2-on (Trimethylencarbonat), 5-Dimethyl-1,3-dioxan-2-on (Neopentylencarbonat), 4-Methoxymethyl-1,3-Dioxolan-2-on, 4-Ethoxymethyl-1,3-Dioxolan-2-on, 4-Phenoxymethyl-1,3-Dioxolan-2-on, 4-Acetoxymethyl-1,3-Dioxolan-2-on, Erythritol-bis(carbonat) und 2,5-Dioxahexansäuredimethylester.

Bevorzugt werden als organische Carbonate solche mit cyclischer Struktur wie 1,3-Dioxolan-2-on (Ethylencarbonat), 4-Methyl-1,3-dioxolan-2-on (Propylencarbonat), 4-Ethyl-1,3-Dioxolan-2-on (Butylencarbonat) oder Glycerincarbonate eingesetzt, bei denen der O-gebundene Wasserstoff der exocyclischen -CH$_2$OH-Gruppe durch NCO-unreaktive Substituenten wie z.B., ggf. substituierte, Alkyl-, Acyl-, Aryl- oder Aralkylgruppen ersetzt wurde.

Die erfindungsgemäß in B) eingesetzten organischen Nitrile entsprechen der allgemeinen Formel (I)

$$R-CN \qquad (I)$$

wobei R für ggf. substituierte (insbes. mit weiteren Nitrilgruppen), gegebenenfalls heteroatomhaltige, lineare, verzweigte oder cyclische C$_1$ - C$_{20}$-Reste steht.

Beispiele solcher Nitrile sind Acetonitril und substituierte Abkömmlinge, z.B. Diphenylacetonitril oder Fluorphenylacetonitril (alle Isomeren), Acrylnitril, Propionitril, Butyronitril, Valeronitril, Hexannitril, Heptannitril, Octannitril, Malon(di)nitril, Glutaronitril, Succinnitril, Adiponitril, alle isomeren Tris(cyano)hexane, Benzonitril, Benzylcyanid, Benzodinitrile (alle Isomeren), Benzotrinitrile (alle Isomeren), Cyanessigsäurester wie Methylcyanoacetat, Ethylcyanoacetat etc., N,N-disubstituierte Cyanoacetamide wie N,N-Dimethyl-2-cyanoacetamid oder O-substituierte Cyanhydrine wie 3-Methoxypropionitril.

Bevorzugte Nitrile sind Acetonitril, Adiponitril, Succinnitril und 1,3,5-Tris(cyano)hexan.

Die Menge der erfindungsgemäß einzusetzenden Komponente B) kann in weiten Grenzen variieren, wobei man technisch vorteilhaft so wenig wie möglich hiervon einsetzt, da es die Raum-Zeit-Ausbeute an Uretdion-Polyisocyanat erniedrigt.

Im Falle der Nitrile kommt es allerdings häufig zu einer erheblichen Beschleunigung der Reaktion, so dass der o.g. Nachteil der Erniedrigung der Raum-Zeit-Ausbeute bei Nutzung dieser Additive sogar überkompensiert werden kann.

Bevorzugt werden 2 bis 50 Gew.-%, besonders bevorzugt 5 bis 30 Gew.-% Additiv bzw. Komponente B), bezogen auf die zu oligomerisierende Menge Isocyanat, eingesetzt.

Das erfindungsgemäße Verfahren wird, abhängig vom gewählten Druck und dem Siedepunkt der Verbindungen der Komponente B), im Temperaturbereich 0°C bis 150°C, bevorzugt 0°C bis 80°C, besonders bevorzugt 0°C bis 60°C, ganz besonders bevorzugt 0°C bis 40°C durchgeführt.

Das erfindungsgemäße Verfahren wird so geführt, dass der Umsatz der NCO-Gruppen 5 bis 90 mol-%, bevorzugt 10 bis 60 mol-%, ganz besonders bevorzugt 10 bis 50 mol-% beträgt.

Typischerweise wird nach Erreichen des gewünschten Umsetzungsgrades die Reaktion abgebrochen. Hierzu eignen sich prinzipiell alle vorbeschriebenen Katalysatorgifte (DE-A 1670667, 1670720, 1934763, 1954093, 3437635, US 4614785) wie Alkylierungsmittel (z.B. Dimethylsulfat, Toluolsulfonsäuremethylester), organische oder anorganische Peroxide, Säurechloride sowie Schwefel, die mit dem Katalysator ggf. unter Temperaturerhöhung zur Reaktion gebracht werden (Variante A).

Nach der Desaktivierung der Reaktionsmischung nach Variante A kann nicht umgesetztes Monomer, der deaktivierte Katalysator und/oder das mit verwendete Additiv der Komponente B) abgetrennt werden.

Das Verfahren kann aber auch ohne chemische Deaktivierung des Katalysators durchgeführt werden. Dazu wird nach Erreichen des gewünschten Umsatzes der aktive Katalysator aus der Reaktionsmischung abgetrennt, um eine Weiterreaktion zu unterbinden (Variante B).

Gleichzeitig mit oder auch nach der Katalysatorabtrennung kann nicht umgesetztes Restmonomer und/oder Additiv aus der nach Variante B behandelten Reaktionsmischung abgetrennt werden.

Im erfindungsgemäßen Verfahren können zur Abtrennung nicht umgesetzter Monomere, des Katalysators und/oder der mit verwendeten Additive sowie optional anderer Bestandteile aus der Reaktionsmischung alle bekannten Separationstechniken wie z.B. Destillation, Extraktion oder Kristallisation/Filtration verwendet werden. Bevorzugt ist die Destillation, ggf. in der speziellen Ausführungsform der Dünnschichtdestillation. Selbstverständlich können auch Kombinationen zweier oder mehrerer dieser Techniken angewendet werden.

Bevorzugt wird zum Reaktionsabbruch nach Variante B der Katalysator destillativ entfernt, wobei gleichzeitig ggf. nicht umgesetztes Monomer und/oder das mit verwendete Carbonat und/oder Nitril mit entfernt werden.

Besonders bevorzugt wird bei der Aufarbeitung einer nach Variante A oder B abgebrochenen Reaktion das enthaltene Restmonomer und/oder das mit verwendete Additiv destillativ entfernt.

Soll das erfindungsgemäß hergestellte Polyisocyanat noch freies, nicht umgesetztes Monomer enthalten, wie es z.B. für die Weiterverarbeitung zu NCO-blockierten Produkten oder NCO-armen bzw. -freien Polyuretdionhärtern z.B. für den Pulverlackbereich von Interesse ist, so kann nach Reaktionsabbruch (Varianten A und B) auf die Monomerenabtrennung und/oder auf die Abtrennung des mit verwendeten Carbonates und/oder Nitrils verzichtet werden.

Es ist für die Durchführung des erfindungsgemäßen Verfahrens unerheblich, ob das Verfahren ganz oder teilweise diskontinuierlich oder kontinuierlich durchgeführt wird.

Weiterhin können im erfindungsgemäßen Verfahren zu einem beliebigen Zeitpunkt, in der Polyisocyanatchemie übliche Additive und Stabilisatoren zugesetzt werden. Beispiele sind Antioxidanzien, wie z.B. sterisch gehinderte Phenole (2,6-Di-tert.butylphenol, 4-Methyl-2,6-di-tert.butylphenol), Lichtschutzmittel, wie z.B. HALS-Amine, Triazole etc., schwache Säuren oder Katalysatoren für die NCO-OH-Reaktion wie z.B. Dibutylzinndilaurat (DBTL).

Des weiteren kann es sinnvoll sein, einem nach Variante B aufgearbeiteten Produkt geringe Mengen eines in Variante A zu verwendenden Katalysatorgiftes zuzusetzen, um die Rückspaltstabilität zu erhöhen und die Neigung zur Nebenproduktbildung, zur Verfärbung bzw. zur Weiterreaktion der freien NCO-Gruppen untereinander, z.B. bei Produktlagerung, zu unterdrücken.

Nach dem erfindungsgemäßen Verfahren hergestellte Produkte auf Basis ggf. verzweigter, linearaliphatischer Di- oder Polyisocyanate, die keine Cycloalkylsubstituenten aufweisen, sind farbhell und haben eine Viskosität < 1000 mPas/23°C. Werden cycloaliphatische und/oder araliphatische Di- oder Polyisocyanate eingesetzt, werden hochviskose bis feste Harze erhalten (Viskosität > 10000 mPas/23°C).

In monomerenarmer Form, d.h. nach Abtrennung von nicht umgesetztem Monomer, weisen die erfindungsgemäßen Produkte einen NCO-Gehalt < 27 Gew.-%, bevorzugt < 25 Gew.-%, auf.

Die nach dem erfindungsgemäßen Verfahren hergestellten Polyisocyanate dienen als Ausgangsmaterialien zur Herstellung von z.B. Formkörpern (ggf. geschäumt), Lacken, Beschichtungsmitteln, Klebstoffen oder Zuschlagstoffen, wobei die enthaltenen freien, nicht uretdionisierten NCO-Gruppen auch ggf. blockiert sein können.

Zur Blockierung der freien, nicht uretdionisierten NCO-Gruppen eignen sich alle dem Fachmann bekannten Methoden. Als Blockierungsmittel können insbesondere Phenole (z.B. Phenol, Nonylphenol, Kresol), Oxime (z.B. Butanonoxim, Cyclohexanonoxim), Lactame (z.B. ε-Caprolactam), sekundäre Amine (z.B. Diisopropylamin), Pyrazole (z.B. Dimethylpyrazol), Imidazole, Triazole oder Malon- und Essigsäureester verwendet werden.

Die nach dem erfindungsgemäßen Verfahren hergestellten, weitgehend nebenproduktfreien, Uretdiongruppen aufweisenden Polyisocyanate können insbesondere zur Herstellung von Ein- und Zweikomponenten-Polyurethanlacken ggf. in Mischungen mit anderen Di- oder Polyisocyanaten des Standes der Technik, wie Biuret-, Urethan-, Allophanat-, Isocyanurat-, sowie Iminooxadiazindiongruppen enthaltenden Di- oder Polyisocyanaten eingesetzt werden. Ferner können sie zur Viskositätserniedrigung höherviskoser Polyisocyanat-Harze eingesetzt werden.

Zur Umsetzung der erfindungsgemäß hergestellten Polyisocyanate zum Polyurethan können alle Verbindungen mit mindestens zwei isocyanatreaktiven Funktionalitäten einzeln oder in beliebigen Mischungen untereinander (isocyanatreaktives Bindemittel) eingesetzt werden.

Bevorzugt ist die Verwendung eines oder mehrerer, in der Polyurethanchemie an sich bekannter, isocyanatreaktiver Bindemittel wie Polyhydroxyverbindungen oder Polyamine. Als Polyhydroxyverbindungen werden besonders bevorzugt Polyester-, Polyether-, Polyacrylat- und/oder Polycarbonsäure-Polyole, ggf. auch unter Zusatz niedermolekularer, mehrwertiger Alkohole eingesetzt.

Das Äquivalentverhältnis zwischen nicht uretdionisierter Isocyanatgruppe, die ggf. auch blockiert sein kann, und isocyanatreaktiver Funktionalität des isocyanatreaktiven Bindemittels, wie z.B. OH-, NH- oder COOH, liegt von 0,8 bis 3, vorzugsweise 0,8 bis 2.

Möglich ist der Einsatz eines Überschusses an isocyanatreaktivem Bindemittel, da die Spaltung des Uretdionringes ggf. bei erhöhter Temperatur und/oder Katalysatorzusatz zur Freisetzung weiterer NCO-Gruppen führt, die mit dem Überschuss an isocyanatreaktiven Funktionalitäten reagieren können. Dadurch erhöht sich die Netzwerkdichte des gebildeten Polymers und dessen Eigenschaften werden vorteilhaft beeinflusst.

Für die Beschleunigung der Vernetzungsreaktion der erfindungsgemäß hergestellten Polyisocyanate mit dem isocyanatreaktiven Bindemittel können alle aus der Polyurethanchemie bekannten Katalysatoren verwendet werden. Beispielsweise können Metallsalze wie Dibutylzinn-IV-dilaurat, Zinn-II-bis(2-ethylhexanoat), Wismut-III-tris(2-ethylhexanoat), Zink-II-bis(2-ethylhexanoat) oder Zinkchlorid sowie tertiäre Amine wie 1,4-Diazabicyclo(2,2,2)oktan, Triethylamin oder Benzyldimethylamin verwendet werden.

Bei der Formulierung werden das erfindungsgemäß hergestellte, ggf. blockierte Polyisocyanat, das isocyanatreaktive Bindemittel, Katalysator(en) und ggf. die üblichen Zusätze wie Pigmente, Füllstoffe, Additive, Verlaufshilfsmittel, Entschäumer und/oder Mattierungsmittel miteinander auf einem üblichen Mischaggregat wie z.B. einer Sandmühle, ggf. unter Verwendung von Lösungsmitteln, vermischt und homogenisiert.

Als Lösungsmittel geeignet sind alle an sich bekannten üblichen Lacklösemittel wie z.B. Ethyl- und Butylacetat, Ethylen- oder Propylenglykolmono-methyl-, -ethyl- oder -propyletheracetat, 2-Butanon, 4-Methyl-2-pentanon, Cyclohexanon, Toluol, Xylol, Solventnaphtha, N-Methylpyrrolidon etc.

Die Beschichtungsmittel können in Lösung oder aus der Schmelze sowie ggf. in fester Form (Pulverlacke) nach den üblichen Methoden wie z.B. Streichen, Rollen, Gießen, Spritzen, Tauchen, dem Wirbelsinterverfahren oder durch elektrostatische Sprühverfahren auf dem zu beschichtenden Gegenstand appliziert werden.

Als Substrate eignen sich sämtliche bekannten Werkstoffe, insbesondere Metalle, Holz, Kunststoffe und Keramik.

**Beispiele:**

Die Prozentangaben des Umsatzes bzw. der Harzausbeute berechnen sich, wenn nicht anderes angegeben, durch Division der Menge an erhaltenem Produkt (Polyisocyanatharz) durch die Menge an eingesetztem Isocyanat-Monomer multipliziert mit 100. Alle weiteren Prozentangaben sind, soweit nicht anders vermerkt, als Gewichtsprozent zu verstehen.

Die Ermittlung des NCO-Gehaltes der in den Beispielen und Vergleichsbeispielen beschriebenen Produkte erfolgte durch Titration gemäß DIN 53 185.

Die dynamischen Viskositäten wurden bei 23°C mit dem Viskosimeter VT 550, Fa. Haake, Karlsruhe, DE bestimmt. Durch Messungen bei unterschiedlichen Schergeschwindigkeiten wurde sichergestellt, dass das Fließverhalten der beschriebenen erfindungsgemäß hergestellten Polyisocyanate wie auch das der Vergleichsprodukte dem Newtonscher Flüssigkeiten entspricht. Die Angabe der Schergeschwindigkeit kann deshalb entfallen.

Die Angaben 'mol-%' bzw. ‚molares Verhältnis unterschiedlicher Strukturtypen zueinander' basieren auf NMR-spektroskopischen Messungen. Sie beziehen sich immer, wenn nicht anders angegeben, auf die Summe der durch die Modifizierungsreaktion (Oligomerisierung) aus den vorher freien NCO-Gruppen des zu modifizierenden Isocyanates gebildeten Strukturtypen.

NMR-Messungen erfolgten auf den Geräten DPX 400, AVC 400 bzw. DRX 700 der Fa. Bruker, Karlsruhe, DE an ca. 50 %-igen Proben in trockenem $CDCl_3$ bzw. an ca. 80 %-igen Proben in $D_6$-DMSO $^{13}$C-NMR: 100 bzw. 176 MHz, relaxation delay: 4 sec, mind. 2000 scans) und/oder an ca. 1-2 %-igen Proben in trockenem $C_6D_6$ ($^1$H-NMR: 400 bzw. 700 MHz, 16 scans). Als Referenz für die ppm-Skala wurden geringe Mengen Tetramethylsilan im entsprechenden Lösungsmittel ($\delta$ = 0 ppm) oder das Lösungsmittel selbst ($CDCl_3$: $\delta$ = 77,0 ppm - 13C-NMR; $D_6$-DMSO: $\delta$ = 43,5 ppm - $^{13}$C-NMR bzw. $C_6D_6$: 7,15 ppm - $^1$H-NMR) gewählt.

Soweit nicht anders angegeben, wurden die Reaktionen mit frisch entgastem HDI als Edukt durchgeführt. Die Bezeichnung ‚frisch entgast' bedeutet dabei, dass das eingesetzte HDI unmittelbar vor der katalytischen Umsetzung durch mindestens 30-minütiges Rühren im Vakuum (< 1 mbar) von gelösten Gasen befreit und anschließend mit Stickstoff belüftet wurde.

Alle Reaktionen wurden unter einer Atmosphäre von trockenem Stickstoff durchgeführt.

Die in den Beispielen und Vergleichsbeispielen beschriebenen Chemikalien und Katalysatoren wurden von den Firmen ABCR, Aldrich, Bayer, Cytec bzw. Fluka erhalten und sind ohne weitere Reinigung eingesetzt worden.

**Beispiel 1 (Vergleich ohne Additiv)**

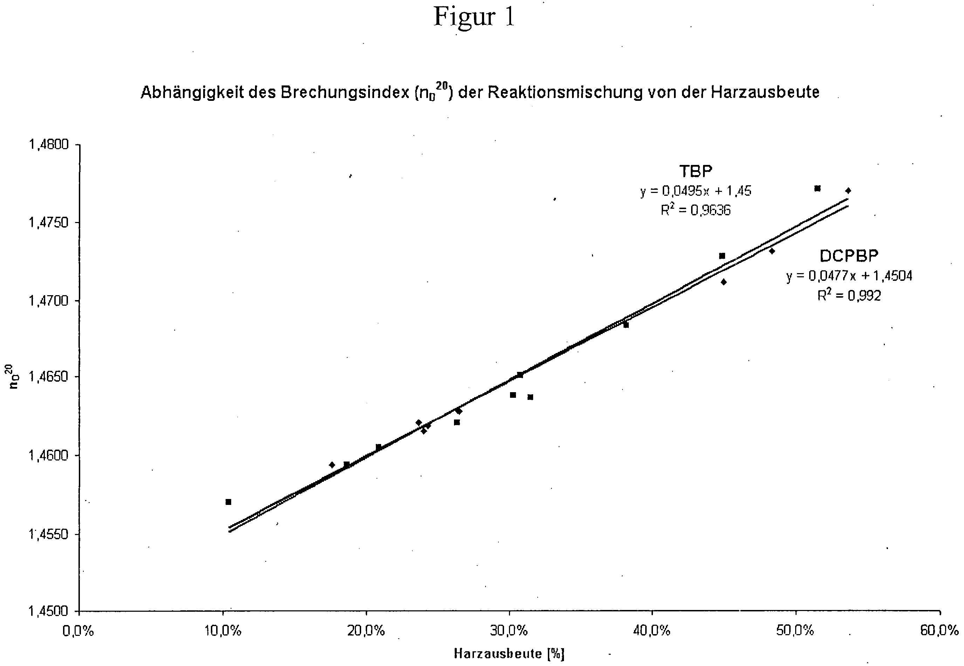

10 g frisch entgastes HDI wurde in einem mittels Septum verschlossenen Glasgefäß bei 30°C unter Stickstoff in Gegenwart von 1 mol-% Tributylphosphin (TBP) (bezogen auf eingesetztes HDI) mit einem Magnetrührkern gerührt, wobei in regelmäßigen Abständen der Fortgang der Reaktion durch Messung des Brechungsindex' der Reaktionsmischung (bei 20°C und der Frequenz des Lichtes der D-Linie des Natriumspektrums, $n_D^{20}$) überprüft wurde (Start = kein Umsatz = $n_D^{20}$ des reinen HDI = 1,4523) und gaschromatografisch der HDI-Gehalt der Proben nach der Methode des internen Standards bestimmt wurde (in Anlehnung an DIN 55 956). Die Harzausbeute (in %) errechnet sich zu 100 % abzüglich der gefundenen Menge an freiem HDI. Dieser beschriebene Versuch wurde 5 mal wiederholt und die erhaltenen Daten zur Aufnahme einer Kalibrierkurve verwendet (vgl. Figur 1).

**Beispiel 2 (Vergleich ohne Additiv)**

Es wurde analog zu Beispiel 1 verfahren, wobei statt Tributylphosphin (TBP) die gleiche Menge in mol-% an Dicyclopentyl-butylphosphin (DCPBP) eingesetzt wurde.

Wie aus Figur 1 hervorgeht, besteht zwischen den Größen Umsatz (Harzausbeute) und $n_D^{20}$ der Reaktionsmischung über einen weiten Ausbeutebereich an Uretdion-Polyisocyanatharz in den Reaktionsmischungen ein nahezu linearer Zusammenhang, der bei beiden Katalysatoren, trotz deutlich differierender Selektivität (s. u.), sehr ähnlich ausfällt.

Für die TBP-katalysierten Versuche kann er durch die Gleichung 1:

$$n_D^{20} = 0{,}0495 * \text{Ausbeute [\%]} + 1{,}4500 \quad \text{(Gleichung 1)}$$

und für die DCPBP-katalysierten Versuche durch die Gleichung 2:

$$n_D^{20} = 0,0477 \text{*Ausbeute [\%]} + 1,4504 \quad \text{(Gleichung 2)}$$

beschrieben werden.

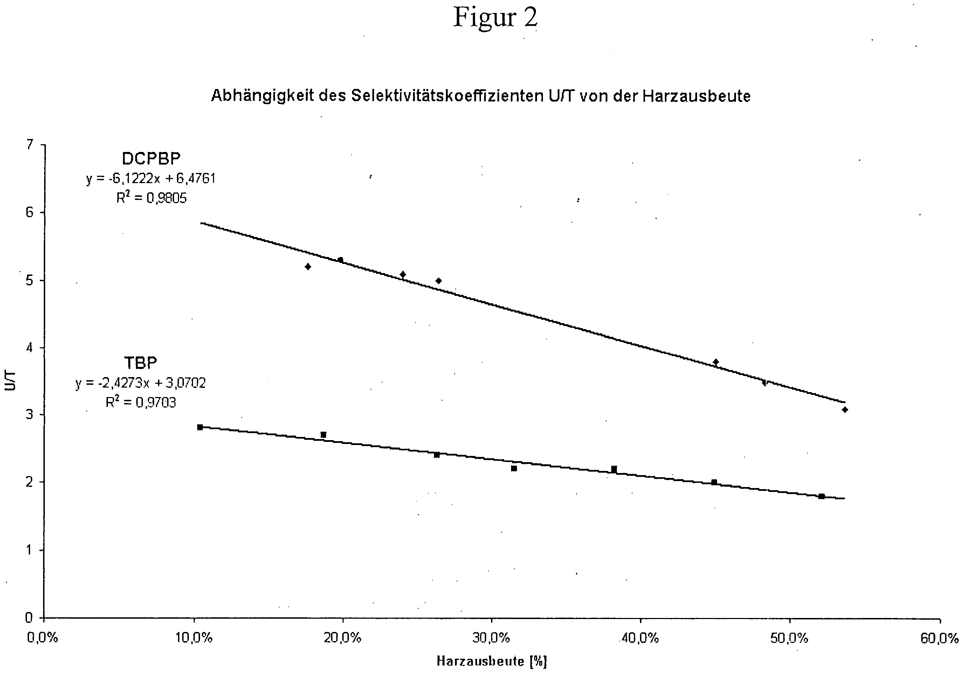

Zur Selektivitäts-Bestimmung wurden ausgewählte Umsatzproben mit hinreichend unterschiedlichem Brechungsindex zur Unterbindung der Weiterreaktion mit der zu ihrem Phosphingehalt doppelt molaren Menge elementaren Schwefels versetzt und NMR-spektroskopisch untersucht. Zur besseren Übersichtlichkeit wurde die Größe U/T als das molare Verhältnis der Uretdionstrukturen zur Summe der beiden Trimerstrukturen (Isocyanurat und Iminooxadiazindion) für die Beurteilung der Selektivität bei dem jeweiligen Umsatz definiert und beide Größen grafisch gegeneinander aufgetragen (Figur 2). Wie man sieht, ist die Abhängigkeit des Selektivitätsparameters U/T vom Umsatz in guter Näherung linear und kann durch die Gleichung 3 beschrieben werden:

$$\text{U/T} = a \text{ * Ausbeute [\%]} + b \text{ (Gleichung 3)}$$

wobei a und b im Falle der TBP-Katalyse folgende Werte aufweisen:

$$a = -2,4273; b = 3,0702$$

während bei der Katalyse mit DCPBP folgende Werte resultieren:

$$a = -6,1222; b = 6,4761.$$

**Beispiele 3 bis 7, erfindungsgemäß und**

**Beispiele 1, 8 bis 10, Vergleich**

Jeweils 10 g HDI, 0,12 g TBP und 2,5 g Carbonat bzw. Additiv in den Beispielen 2 - 6 und 8 - 10 bzw. 2 g Carbonat in Beispiel 7 wurden in mit Septen verschlossenen Glasgefäßen bei 30°C unter Stickstoff mit einem Magnetrührkern gerührt, wobei in regelmäßigen Abständen der Fortgang der Reaktion durch Messung des Brechungsindex' der Reaktionsmischung ($n_D^{20}$) überprüft wurde. Es wurde unmittelbar nach Homogenisierung des jeweiligen Reaktionsansatzes der Brechungsindex bestimmt und als Start-$n_D^{20}$ definiert. Die Differenz zwischen diesem Wert und dem $n_D^{20}$ des reinen HDI (1,4523) wurde von allen weiteren im jeweiligen Versuch gemessenen Brechungsindizes subtrahiert und aus den so erhaltenen, korrigierten $n_D^{20}$-Werten anhand Gleichung 1 der jeweilige Umsatz ermittelt.

Die Überprüfung der Reaktionsmischungen auf ihre strukturelle Zusammensetzung (U/T) bei verschiedenen Umsatzgraden erfolgte analog zu der in den Beispielen 1 und 2 beschriebenen Vorgehensweise.

Um den Effekt der verschiedenen Additive auf die Selektivität der Reaktion unabhängig vom bei den einzelnen Proben gemessenen Umsatz gut vergleichbar darzustellen, wurden anhand der U/T-Umsatz-Kurven U/T-Werte für einheitlich 20 % Umsatz (Harzausbeute) berechnet (vgl. Tabelle 3).

Tabelle 3:

| Bsp. | Carbonat / Additiv | Hildebrand-Parameter[(cal/cm$^3$)$^{1/2}$] | U/T bei 20 % Harzausbeute |
|---|---|---|---|
| | erfindungsgemäß | | |
| **3** | Ethylencarbonat | | 10,1 |
| **4** | 4-Acetoxymethyl-1,3-Dioxolan-2-on | | 5,4 |
| **5** | Butylencarbonat | | 4,8 |
| **6** | Trimethylencarbonat | | 4,8 |
| **7** | Diphenylcarbonat (17%) | | 4,6 |
| | Vergleich | | |
| **8** | Chloroform | 9,3 | 5,8 |
| **9** | NMP | 11,3 | 3,4 |
| **10** | n-Hexan | 7,3 | 2,7 |

(fortgesetzt)

| Vergleich | | |
|---|---|---|
| **1** | ohne | 2,6 |

### Beispiele 11 bis 15, erfindungsgemäß und

### Beispiele 2, 16 bis 18, Vergleich

Jeweils 10 g HDI, 0,14 g DCPBP und 2,5 g Carbonat bzw. Additiv in den Beispielen 11 - 14 und 16 - 18 bzw. 2g Carbonat in Beispiel 15 wurden analog zur Vorgehensweise in den Beispielen 3 bis 10 behandelt. Die Ergebnisse sind in Tabelle 4 zusammengefasst.

Tabelle 4:

| Bsp. | Carbonat / Additiv | Hildebrand-Parameter$[(cal/cm^3)^{1/2}]$ | U/T bei 20 % Harzausbeute |
|---|---|---|---|
| **erfindungsgemäß** | | | |
| **11** | Ethylencarbonat | | 9,2 |
| **12** | Propylencarbonat | | 8,1 |
| **13** | Butylencarbonat | | 8,0 |
| **14** | Dimethylcarbonat | | 6,6 |
| **15** | Diphenylcarbonat (17%) | | 6,2 |
| **Vergleichsbeispiele** | | | |
| **16** | Chloroform | 9,3 | 10,2 |
| **17** | NMP | 11,3 | 5,3 |
| **18** | n-Hexan | 7,3 | 4,7 |
| **2** | ohne | | 5,3 |

### Beispiele 19 und 20 (erfindungsgemäß)

Abhängigkeit der Selektivität von der Carbonatkonzentration

Die in Tabelle 5 angegebene Menge Ethylencarbonat wurde zunächst mit jeweils 10 g HDI gemischt, bis eine klare Lösung entstand. Anschließend wurden 0,14 g DCPBP zugegeben und unter Stickstoff in mit Septen verschlossenen Glasgefäßen bei 30°C mit einem Magnetrührkern gerührt. Die weitere Vorgehensweise war identisch zu der in den vorherigen Beispielen 3 bis 18. Die Ergebnisse sind in Tabelle 5 zusammengestellt.

Tabelle 5

| Bsp. | Anteil Ethylencarbonat im Reaktionsgemisch [%] | U/T bei Harzausbeute in [%] : | | |
|---|---|---|---|---|
| | | **20** | **35** | **50** |
| **19** | **5** | 6,4 | 5,3 | 4,1 |
| **20** | **10** | 6,4 | 5,2 | 4,5 |
| **10** | **20** | 9,2 | 6,5 | 4,8 |
| **2** | 0 (Vergleich) | 5,3 | 4,3 | 3,4 |

Wie man sieht, beobachtet man mit steigendem Carbonatanteil im Reaktionsgemisch einen Anstieg der Uretdion-Selektivität. Allerdings ist die Selektivität selbst bei nur 5 % Ethylencarbonat im Reaktionsgemisch besser, als ohne den Einsatz des Carbonats.

Zusammenfassend lässt sich feststellen, dass ausgehend vom Hildebrand-Parameter, wie die JP 11228524 es lehrt, keine zuverlässige Auswahl von Additiven möglich ist, die zu einer Verbesserung der Uretdionselektivität führt. Ferner wird deutlich, dass sich organische Carbonate, auf welche die japanische Offenlegungsschrift keine expliziten Hinweise liefert, gut zur Selektivitätssteigerung bei der phosphinkatalysierten NCO-Oligomerisierung zu Gunsten von Uretdionen einsetzen lassen.

**Beispiele 21 bis 25 (ohne Lösemittel, Vergleichsversuche) und**

**Beispiele 26 bis 32 (mit Propylencarbonat, erfindungsgmäß)**

In einem doppelwandigen, durch einen externen Kreislauf auf 30°C temperierten Planschliffgefäß mit Rührer, an eine Inertgasanlage (Stickstoff/Vakuum) angeschlossenen Rückflusskühler und Thermometer wurden 4200 g HDI vorgelegt und entgast. Nach Belüften mit Stickstoff wurden 45,2 g DCPBP zudosiert und die in Tabelle 6 angegebene Zeit bei 30°C gerührt. Der Brechungsindex der Mischung ($n_D^{20}$) stieg dabei auf 1,4611. Anschließend wurde das Reaktionsgemisch ohne vorherige Desaktivierung des Phosphins aufgearbeitet. Die Aufarbeitung erfolgte durch Vakuumdestillation in einem Dünnschichtverdampfer, Typ Kurzwegverdampfer (KWV), mit vorgeschaltetem Vorverdampfer (VV) (Destillationsdaten: Druck: 0,08 mbar, VV-Temperatur: 140°C, HV-Temp.: 150°C, Destillationsdauer: 5 bis 6 h), wobei nicht umgesetztes Monomer gemeinsam mit dem aktiven Katalysator als Destillat und das Uretdiongruppen enthaltende Polyisocyanatharz als Sumpfprodukt separiert wurden (Startdurchlauf, Beispiel 21). Das den aktiven Katalysator enthaltende Destillat wurde in einer zweite Planschliff-Rührapparatur, die identisch zur ersten aufgebaut war, gesammelt und unmittelbar nach Destillationsende mit frisch entgastem HDI auf die Ausgangsmenge (4200 g) ausgefüllt. Anschließend wurde erneut die in Tabelle 6 angegebene Zeit bei 30°C gerührt und nach Messung des Brechungsindex' der Reaktionsmischung destillativ aufgearbeitet wie oben beschrieben (Beispiel 22). Diese Verfahrensweise wurde noch dreimal wiederholt (bis Versuch 25).

Anschließend, nach erneutem Auffüllen des Destillates aus dem vorangegangenen Versuch auf die Ausgangsmenge (4200 g) und Bestimmung des Brechungsindex' der Mischung, wurden noch 1000 g Propylencarbonat zugegeben, entsprechend 19 % im Reaktionsgemisch, sofort nach Homogenisierung der Brechungsindex der Mischung erneut gemessen und weiter verfahren wie oben beschrieben, Die Differenz zwischen den beiden gemessenen Brechungsindizes wurde zur Ermittlung des korrigierten $n_D^{20}$ herangezogen. In den folgenden Versuchen wurde verfahren wie oben beschrieben.

Im Versuch 31 wurde nach der Destillation kein frisches HDI mehr zugegeben, sondern nur etwas Propylencarbonat zum Spülen des Reaktors eingesetzt, wodurch sich der Propylencarbonatanteil in der Mischung erhöht. In den Harzen wurde generell kein Propylencarbonat nachgewiesen (GC, Nachweisgrenze ca. 0,03 %), so dass davon ausgegangen wurde, dass kein Propylencarbonatverlust eintrat. Diese Annahme wurde durch die unmittelbar nach Destillation und Auffüllen mit frischem HDI auf den vorherigen Füllstand des Reaktors gemessenen, nahezu identischen Brechungsindizes bestätigt. Im Versuch 32 ist der Propylencarbonatanteil durch Zugabe weiteren Propylencarbonates zusätzlich erhöht worden. Das in diesem Versuch angefallene Destillat enthielt ca. 70 % Propylencarbonat, blieb über Monate eine klare Flüssigkeit und ist zur Wiedergewinnung des Katalysators aufgearbeitet worden.

Tabelle 6:

| Bsp.: | Propylencarbonat [%] | Reaktions -zeit [hh:mm] | $n_D^{20}$/ korr. $n_D^{20}$ | Ausbeute [%] | NCO-Gehalt [%] | Viskosität @23°C [mPas] | Farbzahl [Apha] | freies HDI [%] | U/T |
|---|---|---|---|---|---|---|---|---|---|
| Vergleichsversuche | | | | | | | | | |
| 21 | 0 | 17:20 | 1,4611 | 24,1 | 22,9 | 165 | 40 | 0,10 | 4,8 |
| 22 | 0 | 18:05 | 1,4630 | 28,6 | 22,4 | 95 | 24 | 0,11 | 4,7 |
| 23 | 0 | 18:58 | 1,4626 | 28,4 | 22,5 | 90 | 20 | 0,07 | 4,7 |
| 24 | 0 | 18:32 | 1,4628 | 27,7 | 22,5 | 95 | 9 | 0,06 | 4,8 |
| 25 | 0 | 67:17 | 1,4751 | 54,7 | 19,7 | 240 | 5 | 0,11 | 3,3 |
| **erfindungsgemäße Versuche** | | | | | | | | | |
| **26** | **19** | **18:59** | **1,4594** | **21,2** | **23,3** | **66** | **41** | **0,10** | **8,1** |
| **27** | **19** | **21:31** | **1,4589** | **22,9** | **23,1** | **56** | **19** | **0,09** | **8,5** |
| **28** | **19** | **16:52** | **1,4589** | **19,4** | **23,5** | **64** | **16** | **0,09** | **9,2** |
| **29** | **19** | **18:13** | **1,4592** | **20,4** | **23,4** | **56** | **14** | **0,09** | **8,3** |
| **30** | **19** | **22:53** | **1,4605** | **23,3** | **23,0** | **59** | **14** | **0,06** | **8,5** |
| **31** | **25** | **42:10** | **1,4664** | **42,1** | **21,4** | **78** | **16** | **0,11** | **6,7** |
| **32** | **48** | **62:30** | **1,4705** | **57,5** | **19,7** | **130** | **25** | **0,11** | **6,2** |

Wie man sieht, ist bei den in Tabelle 6 fett dargestellten, erfindungsgemäßen Versuchen 26 bis 32 eine wesentlich höhere Selektivität zu verzeichnen, als bei den Vergleichsversuchen 20 bis 25. Man erhielt nach vergleichbaren Reaktionszeiten bzw. nach Erreichen vergleichbarer Brechungsindizes der Rohware vor Destillation deutlich niedriger viskose Harze, die in den sonstigen, für Polyisocyanate relevanten Parametern Farbzahl, NCO- und Restmonomergehalt sowie Monomerenstabilität bei der Lagerung identisch abschnitten.

**Beispiele 33 bis 38**, **erfindungsgemäß und**

**Beispiele 1,39 bis 41, Vergleich**

Jeweils 10 g HDI, 0,12 g TBP und 2,5 g Nitril bzw. Additiv wurden in mit Septen verschlossenen Glasgefäßen bei 30°C unter Stickstoff mit einem Magnetrührkern gerührt, wobei in regelmäßigen Abständen der Fortgang der Reaktion durch Messung des Brechungsindex' der Reaktionsmischung ($n_D^{20}$) überprüft wurde. Es wurde unmittelbar nach Homogenisierung des jeweiligen Reaktionsansatzes der Brechungsindex bestimmt und als Start-$n_D^{20}$ definiert. Die Differenz zwischen diesem Wert und dem $n_D^{20}$ des reinen HDI (1,4523) wurde von allen weiteren im jeweiligen Versuch gemessenen Brechungsindizes subtrahiert und aus den so erhaltenen, korrigierten $n_D^{20}$-Werten anhand Gleichung 1 der jeweilige Umsatz ermittelt.

Die Überprüfung der Reaktionsmischungen auf ihre strukturelle Zusammensetzung (U/T) bei verschiedenen Umsatzgraden erfolgte analog zu der in den Beispielen 1 und 2 beschriebenen Vorgehensweise.

Um den Effekt der verschiedenen Additive auf die Selektivität der Reaktion unabhängig vom bei den einzelnen Proben gemessenen Umsatz gut vergleichbar darzustellen, wurden anhand der U/T-Umsatz-Kurven U/T-Werte für einheitlich 20 % Umsatz (Harzausbeute) berechnet (vgl. Tabelle 7).

Tabelle 7:

| Bsp. | Nitril / Additiv | Hildebrand-Parameter[(cal/cm$^3$)$^{1/2}$] | U/T bei 20 % Harzausbeute |
|------|------------------|---------------------------------------------|----------------------------|
| | | erfindungsgemäß | |
| 33 | Acetonitril | | 4,7 |
| 34 | Succinnitril | | 6,4 |
| 35 | Adiponitril | | 7,2 |
| 36 | Benzonitril | | 4,3 |
| 37 | 3-Cyanopropansäuremethylester | | 4,4 |
| 38 | Hexan-1,3,6-tricarbonitril | | 5,4 |
| | | Vergleich | |
| 39 | Chloroform | 9,3 | 5,8 |
| 40 | NMP | 11,3 | 3,4 |
| 41 | n-Hexan | 7,3 | 2,7 |
| 1 | Ohne | | 2,6 |

**Beispiele 42 bis 45, erfindungsgemäß und**

**Beispiele 2,46 bis 48, Vergleich**

Jeweils 10 g HDI, 0,14 g DCPBP und 2,5 g Nitril bzw. Additiv wurden analog zur Vorgehensweise in den Beispielen 33 bis 39 behandelt. Die Ergebnisse sind in Tabelle 8 zusammengefasst.

Tabelle 8:

| Bsp. | Nitril / Additiv | Hildebrand-Parameter[(cal/cm$^3$)1/2] | U/T bei 20 % Harzausbeute |
|------|------------------|----------------------------------------|----------------------------|
| | | erfindungsgemäß | |
| 40 | Acetonitril | | 9,4 |
| 41 | Succinnitril | | 12,1 |
| 42 | Adiponitril | | 10,2 |
| 43 | Benzonitril | | 7,9 |

(fortgesetzt)

| Bsp. | Nitril / Additiv | Hildebrand-Parameter[(cal/cm$^3$)1/2] | U/T bei 20 % Harzausbeute |
|---|---|---|---|
| | **erfindungsgemäß** | | |
| 44 | 3-Cyanopropansäuremethylester | | 8,3 |
| 45 | Hexan-1,3,6-tricarbonitril | | 11,3 |
| | **Vergleichsbeispiele** | | |
| 46 | Chloroform | 9,3 | 10,2 |
| 47 | NMP | 11,3 | 5,3 |
| 48 | n-Hexan | 7,3 | 4,7 |
| 2 | Ohne | | 5,3 |

Zusammenfassend lässt sich feststellen, dass ausgehend vom Hildebrand-Parameter, wie die JP 11228524 es lehrt, keine zuverlässige Auswahl von Additiven möglich ist, die zu einer Verbesserung der Uretdionselektivität führt. Ferner wird deutlich, dass sich Nitrile, auf welche die japanische Offenlegungsschrift keine expliziten Hinweise liefert, gut zur Selektivitätssteigerung bei der phosphinkatalysierten NCO-Oligomerisierung zu Gunsten von Uretdionen einsetzen lassen.

**Patentansprüche**

1. Verwendung von organischen Carbonaten und/oder organischen Nitrilen bei der phosphinkatalysierten Oligomerisierung von Mono- und/oder Polyisocyanaten zu Uretdionen.

2. Verfahren zur Herstellung von uretdiongruppenhaltigen Polyisocyanaten, bei dem Polyisocyanate in Gegenwart eines Katalysatorsystems enthaltend

 A) Phosphine und
 B) Organische Carbonate und/oder organische Nitrile

oligomerisiert werden.

3. Verfahren zur Herstellung von uretdiongruppenhaltigen Polyisocyanaten gemäß Anspruch 2, **dadurch gekennzeichnet, dass** in A) tertiäre Phosphine in Mengen von 0,05 bis 3 mol-% bezogen auf die Summe der Menge des Isocyanats eingesetzt werden.

4. Verfahren zur Herstellung von uretdiongruppenhaltigen Polyisocyanaten gemäß Anspruch 2 oder 3, **dadurch gekennzeichnen, dass** in B) Carbonate mit einer cyclischen Struktur eingesetzt werden.

5. Verfahren zur Herstellung von uretdlongruppenhaltigen Polyisocyanaten gemäß einem der Ansprüche 2 bis 4, **dadurch gekennzeichnet, dass** in B) 1,3-Dioxolan-2-on (Ethylencarbonat), 4-Methyl-1,3-dioxotan-2-on (Propylencarbonat), 4-Ethyl-1,3-Dioxolan-2-on (Butylencarbonat) oder Glycerincarbonate eingesetzt werden, wobei bel letzteren die OH-Gruppe der exocyclischen $CH_2$-OH Gruppe durch NCO-unreaktive Alkyl- Acyl-, Aryl-oder Aralkylgruppen abgeschlossen ist.

6. Verfahren zur Herstellung von uretdiongruppenhaltigen Polyisocyanaten gemäß Anspruch 2 oder 3, **dadurch gekennzeichnet, dass** in B) organische Nitrile der allgemeinen Formel (1) eingesetzt werden

   R-CN   (I)

wobei R ein linearer, verzweiger oder cyclischer Rest mit bis zu 20 C-Atomen ist, der optional heteroatnmhaltig ist

7. Verfahren zur Herstellung von uretdiongruppenhaltigen Polyisocyanaten gemäß einem der Ansprüche 2,3 oder 6. **dadurch gekenntzeichnet, dass** in B) Acetonitril, Adiponitril, Succinnitril und/oder 1,3,5-Tris(cyano)hexan einge-

8. Verfahren zur Herstellung von uretdlongruppenhaltigen Polyisocyanaten gemäß einem der Ansprüche 2 bis 7, **dadurch gekennzeichnet, dass** die Komponente B) in Mengen von 5 bis 30 Gew.-% bezogen auf die zu oligomerisierende Menge Isocyanat eingesetzt wird.

9. Verfahren zur Herstellung von uretdiongruppenhaltigen Polyisocyanaten gemäß einem der Ansprüche 2 bis 8, **dadurch gekennzeichnet, dass** im Anschluss an die Isocyanatoligomerisierung nicht umgesetztes Isocyanat und das organische Carbonat bzw. Nitril destillativ entfernt werden.

10. Verfahren zur Herstellung von uretdiongruppenhaltigen Polyisocyanaten gemäß Anspruch 9, **dadurch gekennzeichnet, dass** der Katalysator gemeinsam mit dem organischen Carbonat und/oder Nitril sowie nicht umgesetztem Isocyanat durch Destillation abgetrennt wird.

**Claims**

1. Use of organic carbonates and/or organic nitriles in the phosphine-catalysed oligomerization of monoisocyanates and/or polyisocyanates to form uretdiones.

2. Process for preparing polyisocyanates containing uretdione groups, in which polyisocyanates are oligomerized in the presence of a catalyst system comprising

   A) phosphines and
   B) organic carbonates and/or organic nitriles.

3. Process for preparing polyisocyanates containing uretdione groups according to Claim 2, **characterized in that** tertiary phosphines are used in amounts of from 0.05 to 3 mol%, based on the sum of the amount of isocyanate, in A).

4. Process for preparing polyisocyanates containing uretdione groups according to Claim 2 or 3, **characterized in that** carbonates having a cyclic structure are used B).

5. Process for preparing polyisocyanates containing uretdione groups according to any of Claims 2 to 4, **characterized in that** 1,3-dioxolan-2-one (ethylene carbonate), 4-methyl-1,3-dioxolan-2-one (propylene carbonate), 4-ethyl-1,3-dioxolan-2-one (butylene carbonate) or glycerol carbonates are used in B), with the OH group of the exocyclic $CH_2$-OH group in the latter being capped by NCO-unreactive alkyl, acyl, aryl or aralkyl groups.

6. Process for preparing polyisocyanates containing uretdione groups according to Claim 2 or 3, **characterized in that** organic nitriles of the general formula (I)

   $$R\text{-}CN \qquad (I)$$

   where R is a linear, branched or cyclic radical which has up to 20 carbon atoms and optionally contains heteroatoms, are used in B).

7. Process for preparing polyisocyanates containing uretdione groups according to any of Claims 2, 3 and 6, **characterized in that** acetonitrile, adiponitrile, succinonitrile and/or 1,3,5-tris(cyano)hexane are used in B).

8. Process for preparing polyisocyanates containing uretdione groups according to any of Claims 2 to 7, **characterized in that** the component B) is used in amounts of from 5 to 30% by weight, based on the amount of isocyanate to be oligomerized.

9. Process for preparing polyisocyanates containing uretdione groups according to any of Claims 2 to 8, **characterized in that** unreacted isocyanate and the organic carbonate or nitrile are removed by distillation subsequent to the isocyanate oligomerization.

10. Process for preparing polyisocyanates containing uretdione groups according to Claim 9, **characterized in that** the catalyst is separated off by distillation together with the organic carbonate and/or nitrile and unreacted isocyanate.

**Revendications**

1. Utilisation de carbonates organiques et/ou de nitriles organiques lors de l'oligomérisation catalysée par des phosphines de mono-isocyanates et/ou de polyisocyanates en uretdiones.

2. Procédé pour la préparation de polyisocyanates contenant des groupes uretdione, dans lequel des polyisocyanates sont oligomérisés en présence d'un système catalytique contenant

   A) des phosphines
   B) des carbonates organiques et/ou des nitriles organiques.

3. Procédé pour la préparation de polyisocyanates contenant des groupes uretdione selon la revendication 2, **caractérisé en ce qu'**on utilise, dans A), des phosphines tertiaires en des quantités de 0,05 à 3% en mole, par rapport à la somme des quantités d'isocyanate.

4. Procédé pour la préparation de polyisocyanates contenant des groupes uretdione selon la revendication 2 ou 3, **caractérisé en ce qu'**on utilise, dans B), des carbonates présentant une structure cyclique.

5. Procédé pour la préparation de polyisocyanates contenant des groupes uretdione selon l'une quelconque revendication 2 à 4, **caractérisé en ce qu'**on utilise, dans B), de la 1,3-dioxolan-2-one (carbonate d'éthylène), de la 4-méthyl-1,3-dioxolan-2-one (carbonate de propylène), de la 4-éthyl-1,3-dioxolan-2-one (carbonate de butylène) ou des carbonates de glycérol, le groupe OH du groupe $CH_2$-OH exocyclique de ces derniers étant terminé par des groupes alkyle, acyle, aryle ou aralkyle non réactifs avec NCO.

6. Procédé pour la préparation de polyisocyanates contenant des groupes uretdione selon la revendication 2 ou 3, **caractérisé en ce qu'**on utilise, dans B), des nitriles organiques de formule générale (I)

$$R\text{-}CN \qquad (I)$$

dans laquelle R représente un radical linéaire, ramifié ou cyclique comprenant jusqu'à 20 atomes de carbone, qui contient éventuellement des hétéroatomes.

7. Procédé pour la préparation de polyisocyanates contenant des groupes uretdione selon l'une quelconque des revendications 2, 3 ou 6, **caractérisé en ce qu'**on utilise, dans B), de l'acétonitrile, de l'adiponitrile, du nitrile succinique et/ou du 1,3,5-tris(cyano)hexane.

8. Procédé pour la préparation de polyisocyanates contenant des groupes uretdione selon l'une quelconque des revendications 2 à 7, **caractérisé en ce que** le composant B) est utilisé en des quantités de 5 à 30% en poids par rapport à la quantité d'isocyanate à oligomériser.

9. Procédé pour la préparation de polyisocyanates contenant des groupes uretdione selon l'une quelconque des revendications 2 à 8, **caractérisé en ce que** l'isocyanate non transformé et le carbonate ou le nitrile organique sont éliminés par distillation après l'oligomérisation d'isocyanate.

10. Procédé pour la préparation de polyisocyanates contenant des groupes uretdione selon la revendication 9, **caractérisé en ce que** le catalyseur est séparé par distillation simultanément avec le carbonate et/ou le nitrile organique ainsi que l'isocyanate non transformé.

# Figur 1

Abhängigkeit des Brechungsindex ($n_D^{20}$) der Reaktionsmischung von der Harzausbeute

**TBP**
$y = 0,0495x + 1,45$
$R^2 = 0,9636$

**DCPBP**
$y = 0,0477x + 1,4504$
$R^2 = 0,992$

$n_D^{20}$

1,4800
1,4750
1,4700
1,4650
1,4600
1,4550
1,4500

0,0%  10,0%  20,0%  30,0%  40,0%  50,0%  60,0%

Harzausbeute [%]

# Figur 2

Abhängigkeit des Selektivitätskoeffizienten U/T von der Harzausbeute

EP 1 683 818 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3030513 A
- DE 3437635 A
- DE 3739549 A
- DE 1670720 A
- EP 1422223 A
- DE 10354544
- JP 11228524 B

- DE 1670667 A
- DE 1670720
- DE 1934763
- DE 1954093
- DE 3437635
- US 4614785 A

**In der Beschreibung aufgeführte Nicht-Patentliteratur**

- **J. PRAKT.** *Chem./Chem. Ztg.,* 1994, vol. 336, 185-200